# EUROPEAN PATENT APPLICATION

(11) **EP 4 641 596 A1**
(43) Date of publication of application: **29.10.2025**
(21) Application number: 25171478.8
(22) Date of filing: 18.04.2025
(51) Int. Cl.: H01F 27/22, H01F 27/32

(54) **TRANSFORMER, ON-BOARD CHARGER, ELECTRIC DRIVE SYSTEM AND VEHICLE**

(30) Priority: 24.04.2024 CN 202410504514
(71) Applicant: Valeo eAutomotive Shenzhen Co., Ltd, Shenzhen Guangdong 518128 (CN)
(72) Inventor: LIU, Quan, Shenzhen, 518128 (CN); NICOLAI, Jean-Marc, 95892 Cergy Pontoise (FR); DIALLO, Massourang, 95892 Cergy Pontoise (FR); DA-CUNHA-ALVES, Wendell, 95892 Cergy Pontoise (FR); ZHU, Yuncong, Shenzhen, 518128 (CN); ZHANG, Cansheng, Shenzhen, 518128 (CN)
(74) Representative: Valeo Powertrain Systems

(57) **Abstract**

The present disclosure relates to a transformer, comprising: a core, comprising a frame part and a central pillar; a coil wound on the central pillar; and a holder comprising a shaft part, the shaft part wrapping the central pillar so that the shaft part is located between the coil and the central pillar. A first fluid channel for thermally conductive potting glue to flow through is provided between the shaft part and the central pillar, and the shaft part is provided with a second fluid channel allowing the thermally conductive potting glue to flow through the shaft part from the first fluid channel to the coil. The present disclosure further relates to an on-board charger, an electric drive system, and a vehicle.

## Description

### TECHNICAL FIELD

The present disclosure relates to a transformer. The present disclosure further relates to an on-board charger comprising such a transformer, an electric drive system comprising the on-board charger, and a vehicle comprising the electric drive system.

### BACKGROUND

Vehicles generally comprise multiple transformers to supply different voltages to different electrical components. The coils and core of a transformer generate a large amount of heat during sustained operation. A known method of enhancing the heat dissipation capacity of a transformer is to encapsulate the transformer in thermally conductive potting glue, so that heat generated by the transformer is efficiently conducted to an external heat dissipation system. However, the core of the transformer is held hermetically in a holder having a closed surface, and the coils are wound close together in multiple layers on the holder. The thermally conductive potting glue can only penetrate inwards from outside the transformer, and struggles to enter the interior of the transformer. In particular, it is difficult for the thermally conductive potting glue to fill gaps between the holder and the core, gaps between the holder and the coils, and gaps between the coils in inner layers. It is thus difficult to improve heat conduction performance inside the transformer; generated heat builds up inside the transformer, causing a rise in temperature that affects the reliability and performance of the transformer.

Thus, there is an urgent need for a transformer that makes it easy for thermally conductive potting glue to enter the interior thereof, so as to improve heat conduction performance, to suit high-power application scenarios.

### SUMMARY OF THE INVENTION

An objective of the present disclosure is to propose a transformer to solve the abovementioned technical problem, the transformer having multiple fluid channels which make it easy for thermally conductive potting glue to flow into the interior of the transformer, which thus has good heat conduction performance, and can be used in high-power application scenarios.

The abovementioned objective is achieved by a transformer according to an embodiment of the present disclosure, the transformer comprising: a core, comprising a frame part and a central pillar; a coil wound on the central pillar; and a holder comprising a shaft part, the shaft part wrapping the central pillar so that the shaft part is located between the coil and the central pillar. A first fluid channel for thermally conductive potting glue to flow through is provided between the shaft part and the central pillar, and the shaft part is provided with a second fluid channel allowing the thermally conductive potting glue to flow through the shaft part from the first fluid channel to the coil.

An objective of the present disclosure is to provide a transformer, configured to make it easy for thermally conductive potting glue to flow into the interior of the transformer, so as to achieve good heat conduction performance suiting high-power application scenarios. The transformer according to the present disclosure comprises a first fluid channel arranged between the shaft part of the holder and the central pillar of the core, and a second fluid channel arranged on the shaft part of the holder and running through the shaft part. Thus, thermally conductive potting glue is able to flow through the first fluid channel to a region between the shaft part of the holder and the central pillar of the core, to fill a gap between the holder and the core. The thermally conductive potting glue is also able to flow through the shaft part from the first fluid channel to the coil, so as to fill a gap between the holder and the coil. In addition, the thermally conductive potting glue flowing through the shaft part to the coil can penetrate into the coil from the shaft part of the holder, so as to fill a gap between coil inner layers. Thus, the transformer according to the present disclosure enables thermally conductive potting glue to fully fill gaps inside the transformer, thereby improving heat conduction performance inside the transformer, to efficiently conduct heat generated by the transformer to the outside of the transformer, eliminating heat accumulation, to suit high-power application scenarios.

A transformer according to the present disclosure may also have one or more of the following features individually or in combination.

According to an embodiment of the present disclosure, the shaft part is provided with a third fluid channel allowing the thermally conductive potting glue to flow from the outside to a region between the shaft part and the coil. Thus, a gap between the shaft part of the holder and the coil can also be filled by thermally conductive potting glue flowing through the third fluid channel.

According to an embodiment of the present disclosure, the first fluid channel comprises a recessed or protruding structure arranged on a surface of the shaft part that faces the central pillar. The recessed or protruding structure can separate the central pillar and the shaft part by a certain distance, to form the first fluid channel.

According to an embodiment of the present disclosure, the second fluid channel comprises a first through-hole running through the shaft part. Thermally conductive potting glue can flow through the first through-hole.

According to an embodiment of the present disclosure, the third fluid channel is formed by a penetrating part formed inside the coil.

According to an embodiment of the present disclosure, the shaft part is provided with a protrusion extending from a surface of the shaft part that faces the coil, the protrusion separating the coil to form the penetrating part.

According to an embodiment of the present disclosure, the shaft part is provided with a second through-hole connecting the penetrating part and the first fluid channel. Thus, thermally conductive potting glue can flow through the second through-hole from the penetrating part to the first fluid channel. This is especially beneficial for a transformer with a long first fluid channel.

According to an embodiment of the present disclosure, the shaft part is provided with a protrusion extending from a surface of the shaft part that faces the coil, the third fluid channel being formed in the protrusion.

According to an embodiment of the present disclosure, the holder further comprises a wiring part, the wiring part being provided with a wiring terminal, and the coil being electrically connected to the wiring terminal.

According to an embodiment of the present disclosure, the coil comprises a first coil and a second coil; the holder comprises a first holder and a second holder, the first holder comprising a first shaft part located between the first coil and the central pillar, and the second holder comprising a second shaft part located between the second coil and the central pillar. The first holder further comprises a first mating part, and the second holder further comprises a second mating part, the first mating part mating with the second mating part such that the first holder and the second holder are joined together to form the holder.

According to an embodiment of the present disclosure, the first mating part is a joining slot, and the second mating part is a joining protrusion capable of being joined to the joining slot; or the second mating part is a joining slot, and the first mating part is a joining protrusion capable of being joined to the joining slot.

According to an embodiment of the present disclosure, the central pillar comprises a first central pillar and a second central pillar, the first coil being wound on the first central pillar, the second coil being wound on the second central pillar, and the first central pillar and the second central pillar being aligned with and adjacent to each other, so as to form the central pillar.

The present disclosure further relates to an on-board charger, comprising the transformer described above.

The present disclosure further relates to an electric drive system, comprising the on-board charger described above.

The present disclosure further relates to a vehicle, comprising the on-board charger or the electric drive system described above.

### BRIEF DESCRIPTION OF THE DRAWINGS

The foregoing and other features and advantages of the present disclosure will become more apparent from the following detailed description of exemplary embodiments with reference to the accompanying drawings, and the description and the accompanying drawings are for illustrative purposes only and are not intended to limit the scope of the present disclosure in any way. The drawings below are not scaled drawings according to actual dimensions but rather focus on showing the main purpose of the present disclosure.
Fig. 1 is a 3D schematic drawing of a transformer according to the present disclosure.
Figs. 2A- 2C show a core of a transformer according to the present disclosure, wherein Fig. 2A shows the assembled core, Fig. 2B shows the core with a second central pillar omitted, and Fig. 2C shows the second central pillar.
Figs. 3A - 3C show a holder of a transformer according to the present disclosure, wherein Fig. 3A shows the assembled holder, Fig. 3B shows a first holder, and Fig. 3C shows a second holder.
Fig. 4 is a sectional view of a transformer according to the present disclosure, showing multiple fluid channels for thermally conductive potting glue.
Fig. 5 is a side view of a transformer according to the present disclosure.

### DETAILED DESCRIPTION

To clarify the objective, technical solutions and advantages of embodiments of the present disclosure, the technical solutions of the embodiments of the present disclosure are described clearly and completely below in conjunction with the drawings of the embodiments of the present disclosure.

Unless defined otherwise, the technical or scientific terms used herein shall have the common meanings as understood by those of ordinary skill in the field to which the present disclosure belongs. Words such as "one", "a" or "the" used in the description and the claims of the patent application disclosed herein do not indicate a quantity limit, but mean that there is at least one. "Comprising" or "including" and similar words mean that the element or object appearing before the word encompasses the elements or objects and their equivalents listed after the word. Although expressions such as "first" and "second" are used to describe various components of the present disclosure, they are only intended to distinguish one component from another, rather than limiting the sequence or importance of the corresponding components. Without departing from the scope of the present disclosure, "first element" may be written as "second element", and, similarly, "second element" may be written as "first element". Words such as "connected" or "linked" are not restricted to a physical or mechanical connection, and may comprise an electrical connection, whether direct or indirect. The terms "upper", "lower", "left", "right" and the like are only used to indicate a relative positional relationship, and when the absolute position of a described object changes, the relative positional relationship may also change accordingly.

In order to facilitate description, the drawings of the present disclosure accordingly simplify or omit components commonly used in the art, such as external connection lines and other components that are irrelevant to the description of the present disclosure. These omitted or simplified components do not affect the understanding of the content of the present disclosure by a person skilled in the art.

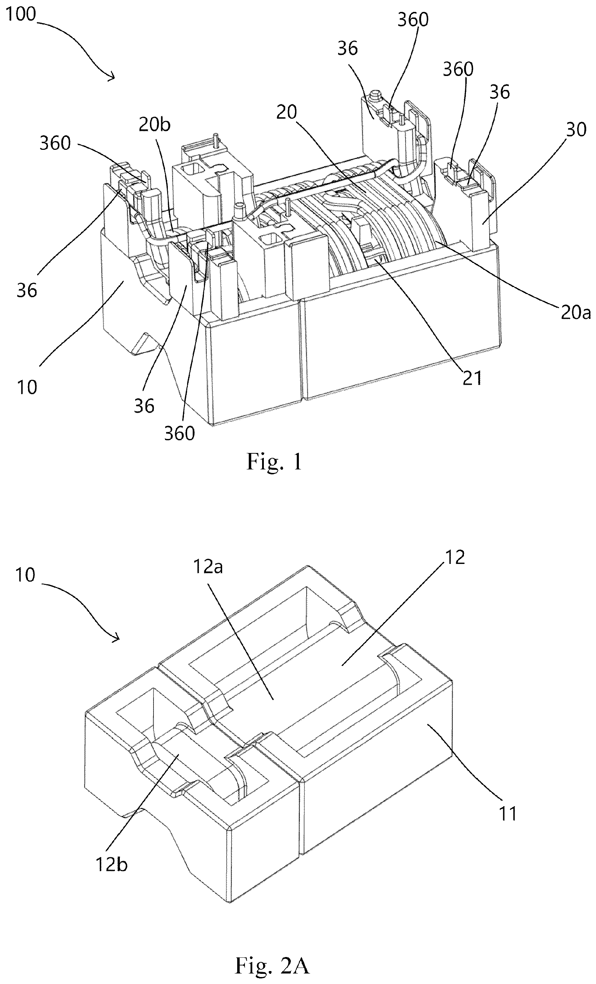

Fig. 1 shows a transformer 100 according to an exemplary embodiment of the present disclosure. The transformer 100 is for example a component of an on-board charger of a vehicle, the component being used for voltage conversion, receiving an input voltage and converting same to an output voltage by electromagnetic induction. For example, the transformer 100 may receive a power supply voltage of 220 V or 380 V, and convert same to high-voltage AC which, once rectified, can charge a battery of the vehicle. Alternatively, the transformer 100 may receive inverted, high-voltage AC from the battery, and convert same to a power supply voltage of 220 V or 380 V, for use as an external power supply of the vehicle.

As shown in Fig. 1, the transformer 100 comprises a core 10, a coil 20 and a holder 30. The holder 30 comprises a wiring part 36 provided with a wiring terminal 360. The wiring terminal 360 has the form of an electrode plate, and multiple wiring terminals 360 are located at the same side of the transformer 100. Such an arrangement allows the transformer 100 to be easily connected to an external connection member. Specifically, when the external connection member is a printed circuit board, a hole may be made in the printed circuit board, being positioned and sized to be suitable for the insertion of the wiring terminal 360. Thus, the transformer 100 is connectable to the printed circuit board by plugging. The coil 20 is electrically connected to the wiring terminal 360 and, via the wiring terminal 360, receives an input voltage or outputs an output voltage converted by the transformer 100.

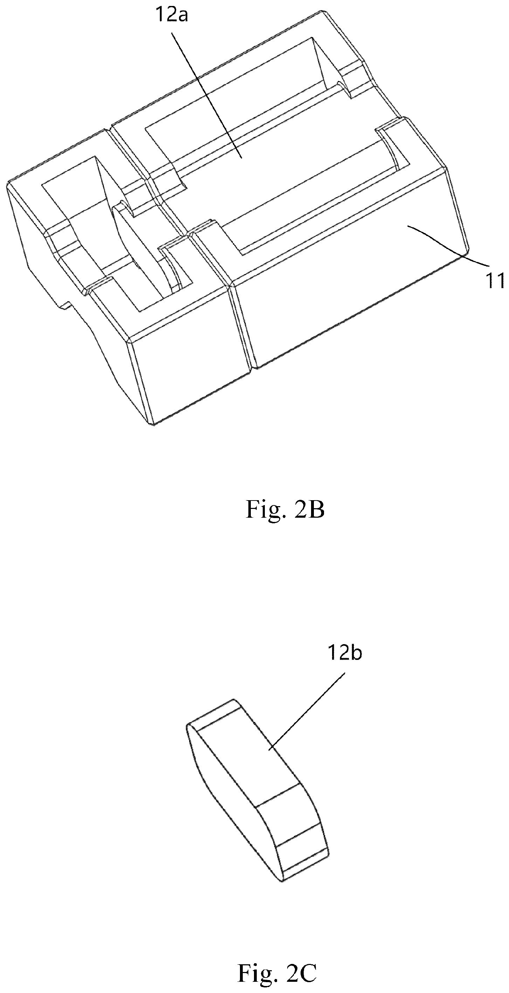

Figs. 2A - 2C show the core 10 of the transformer 100. Referring to Figs. 2A - 2C, the core 10 comprises a frame part 11 and a central pillar 12. The central pillar 12 comprises a first central pillar 12a, and a second central pillar 12b which is aligned with the first central pillar 12a and arranged adjacently to the first central pillar 12a. The first central pillar 12a is integral with the frame part 11, and the second central pillar 12b can be stuck to the first central pillar 12a to form the core 10.

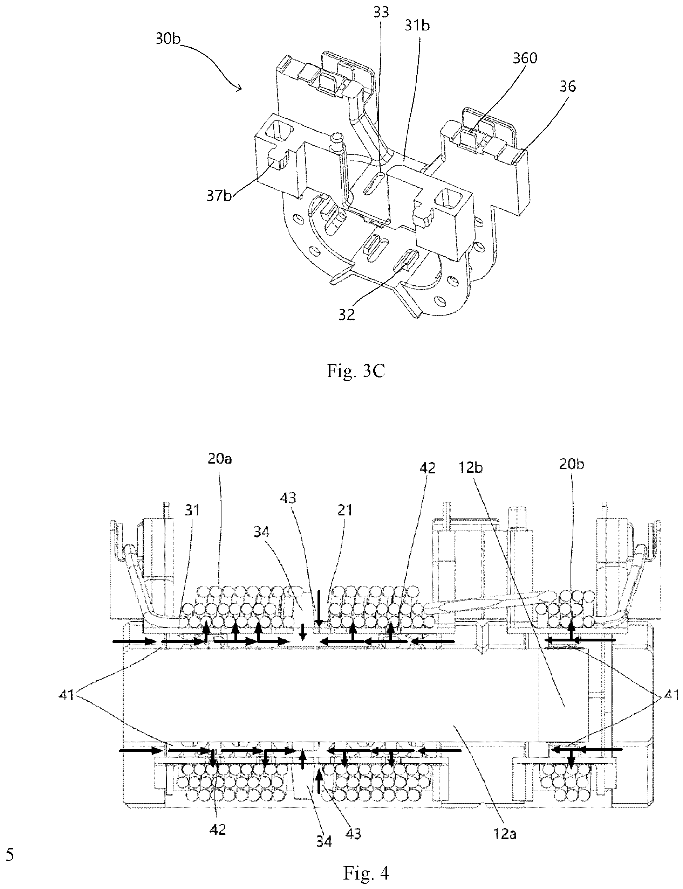

Referring to Fig. 1 in conjunction with Fig. 4, the coil 20 of the transformer 100 is wound on the central pillar 12 of the core 10, and comprises a first coil 20a wound on the first central pillar 12a and a second coil 20b wound on the second central pillar 12b. The first coil 20a and the second coil 20b may respectively serve as a primary coil that receives an input voltage, and a secondary coil that outputs the converted input voltage.

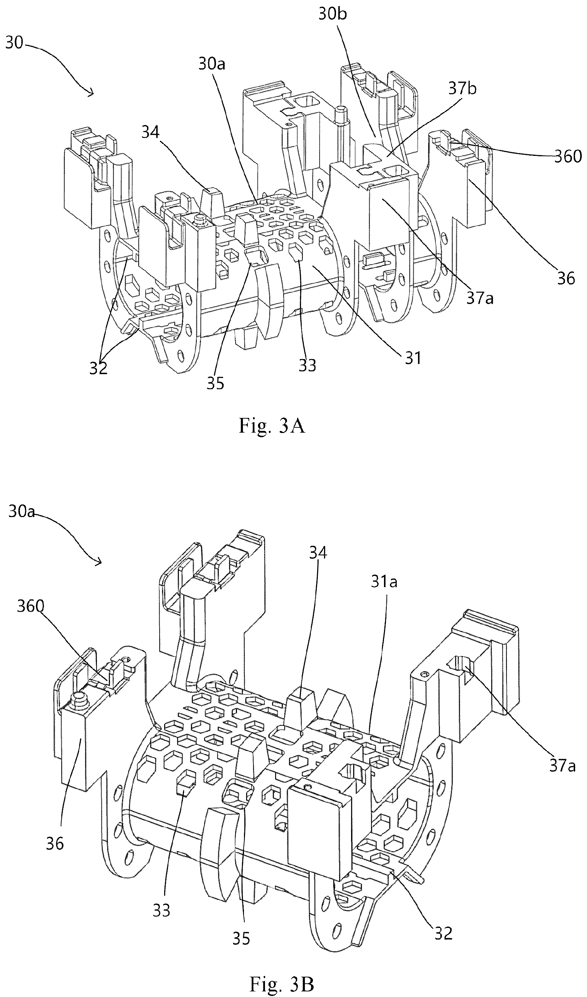

Figs. 3A - 3C show the holder 30 of the transformer 100. Referring to Figs. 3A - 3C in conjunction with Figs. 1 and 4, the holder 30 comprises a shaft part 31. In the assembled structure of the transformer 100, the shaft part 31 is located between the coil 20 and the central pillar 12 and wraps the central pillar 12. Specifically, the holder 30 comprises a first holder 30a and a second holder 30b which are joined together. The first holder 30a comprises a first mating part 37a in the form of a joining slot, and the second holder 30b comprises a second mating part 37b in the form of a joining protrusion. When assembling the transformer 100, the joining protrusion of the second mating part 37b is joined to the joining slot of the first mating part 37a, to form the holder 30. Optionally, it is also possible for the first mating part 37a to be formed as a joining protrusion, and the second mating part 37b to be formed as a joining slot. Further optionally, the first mating part 37a and the second mating part 37b can also have other forms capable of mating with each other to connect the first holder 30a to the second holder 30b.

Further referring to Figs. 3B and 3C in conjunction with Fig. 4, the first holder 30a comprises a first shaft part 31a which, in the assembled structure of the transformer 100, is located between the first coil 20a and the first central pillar 12a and wraps the first central pillar 12a. The second holder 30b comprises a second shaft part 31b which, in the assembled structure of the transformer 100, is located between the second coil 20b and the second central pillar 12b and wraps the second central pillar 12b. When assembling the transformer 100, the second central pillar 12b may first be accommodated in the second shaft part 31b of the second holder 30b and wound with the second coil 20b, and the second holder 30b may then be joined to the first holder 30a.

During operation of the transformer 100, the coil 20 and the core 10 can generate a large amount of heat. This heat needs to be conducted to an external heat-dissipating device, to prevent faults from occurring in the transformer 100 due to overheating. In the case of high-power transformers 100, the heat conduction performance inside such transformers 100 is especially important. For example, when it is necessary to improve the charging performance of a vehicle, the power of a transformer in a high-power on-board charger must be increased accordingly. The transformer 100 according to the present disclosure has a novel structure, enabling thermally conductive potting glue for encapsulating the transformer to fully infiltrate all of the components of the transformer, and fill any gaps that might be present inside the transformer. These gaps can have a major negative impact on the heat conduction performance of the transformer 100. As a result of using thermally conductive potting glue to fill these gaps, the transformer 100 according to the present disclosure has good heat conduction performance, and power can thus be increased.

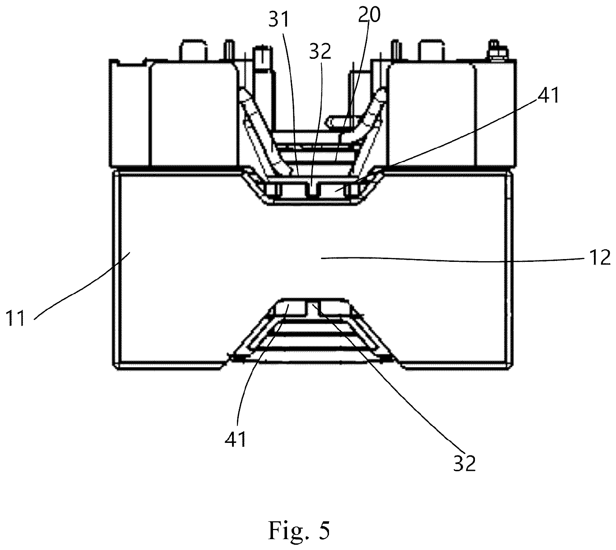

Referring to the sectional view shown in Fig. 4 and the side view shown in Fig. 5, the transformer 100 according to the present disclosure is provided with multiple fluid channels. The thermally conductive potting glue is able to flow into interior positions in the transformer 100 through these fluid channels, including positions between the shaft part 31 of the holder 30 and the central pillar 12 of the core 10, positions between the shaft part 31 and the coil 20, etc. Thus, the thermally conductive potting glue is able to penetrate outwards from these interior positions, for example into the interior of the coil 20, etc. This outward penetration of the thermally conductive potting glue combines with inward penetration of the thermally conductive potting glue into the transformer 100 from the outside, enabling the thermally conductive potting glue to fully infiltrate all of the components of the transformer 100, and fill any gaps that might be present.

Specifically, the fluid channels comprise a first fluid channel 41 arranged between the shaft part 31 (including the first shaft part 31a and/or the second shaft part 31b) of the holder 30 and the central pillar 12 of the core 10. The first fluid channel 41 may be formed by a recessed or protruding structure 32 arranged on a surface of the shaft part 31 that faces the central pillar 12. These recessed or protruding structures 32 may comprise isolating ribs formed on an inner surface of the shaft part 31, or may comprise other structures adapted to separate the shaft part 31 from the central pillar 12. The recessed or protruding structures 32 can cause the shaft part 31 and the central pillar 12 to be separated by a certain gap, for the thermally conductive potting glue to flow through. Referring to Fig. 5, the first fluid channel 41 is in communication with the outside at two lateral ends of the transformer 100, so the thermally conductive potting glue can flow into the transformer 100 from the outside through the first fluid channel 41, to fill a gap between the shaft part 31 and the central pillar 12.

The fluid channels also comprise a second fluid channel 42, arranged at the shaft part 31 of the holder 30, and passing through the shaft part 31 (including the first shaft part 31a and/or the second shaft part 31b). Thermally conductive potting glue in the first fluid channel 41 can flow through the shaft part 31 to the coil 20, specifically to an inner layer of the coil 20, via the second fluid channel 42. Referring to Fig. 4, the coil 20 consists of multiple coil layers. The thermally conductive potting glue that flows to the inner layer through the second fluid channel 42 can penetrate outwards through gaps in the coil 20, and thermally conductive potting glue from the outside can penetrate inwards from an outer layer of the coil 20 through gaps in the coil 20; in this way, the gaps in the coil 20 are fully filled. Illustratively, the shaft part 31 of the holder 30 is provided with a first through-hole 33 running through the shaft part 31, and the second fluid channel 42 may be formed by the first through-hole 33. Referring to Figs. 3A - 3C in conjunction with Fig. 4, the shaft part 31 may comprise multiple first through-holes 33 in a honeycomb arrangement, thereby forming multiple second fluid channels 42, such that thermally conductive potting glue is able to flow through the shaft part 31 from all portions of the shaft part 31. It will be readily understood that the thermally conductive potting glue in the second fluid channel 42 is also able to fill a gap between the coil 20 and the shaft part 31.

The fluid channels further comprise a third fluid channel 43, through which the thermally conductive potting glue can flow from the outside to a region between the shaft part 31 and the coil 20. Referring to Figs. 3A - 3C in conjunction with Fig. 4, the shaft part 31 of the holder 30 is provided with a protrusion 34 extending from a surface of the shaft part 31 that faces the coil 20 (i.e. extending outwards); due to the protrusion 34, the coil 20 is separated, and a penetrating part 21 is formed inside the coil 20. The third fluid channel 43 may be formed by the penetrating part 21. The shaft part 31 is also provided with a second through-hole 35 connecting the penetrating part 21 and the first fluid channel 41. The thermally conductive potting glue can thus flow through the second through-hole 35 into the first fluid channel 41. This is especially beneficial for transformers 100 in which the shaft part 31 of the holder 30 is long. As shown in Figs. 3B and 4, the length of the first shaft part 31a of the first holder 30a is long, so the first fluid channel 41 formed between the first shaft part 31a and the first central pillar 12a is long. Thermally conductive potting glue flowing into the first fluid channel 41 from the two lateral ends of the transformer 100 will struggle to flow to a middle portion of the first fluid channel 41. As a result of providing the protrusion 34 in a middle portion of the first shaft part 31a, the first coil 20a is separated in the length direction of the shaft part 31 (i.e. in the direction of extension of the first fluid channel 41), thus forming the penetrating part 21. Further, by means of the second through-hole 35, thermally conductive potting glue is able to flow directly from the outside into the middle portion of the first fluid channel 41 through the third fluid channel 43, thus shortening the flow path to the middle portion. This can prevent a region devoid of thermally conductive potting glue from occurring in the middle portion of the first fluid channel 41. It will be readily understood that thermally conductive potting glue in the third fluid channel 43 is also able to penetrate into the interior of the coil 20 at two sides.

In the embodiment shown in the drawings, the length of the second shaft part 31b of the second holder 30b is short, and is not provided with a protrusion forming a penetrating part. In an optional embodiment not depicted in the drawings, a protrusion forming a penetrating part may also be similarly provided on the second shaft part 31b of the second holder 30b.

Optionally, the protrusion 34 of the shaft part 31 of the holder 30 may be hollow. Thermally conductive potting glue can flow from the outside through the hollow protrusion 34 to a region between the shaft part 31 and the coil 20. That is, the third fluid channel 43 may be formed in the protrusion 34.

According to another aspect of the present disclosure, an electric drive system is proposed, comprising the on-board charger described above.

According to another aspect of the present disclosure, a vehicle is proposed, comprising the on-board charger or electric drive system described above. The vehicle may be an electrified vehicle, such as a battery electric vehicle (BEV), a hybrid electric vehicle (HEV), a plug-in hybrid electric vehicle (PHEV) or a range extended electric vehicle (range extended EV), etc.

Certain features, structures or characteristics in one or more embodiments of the present disclosure may be combined appropriately.

The above is a description of the present disclosure and should not be regarded as limiting it. Although some exemplary embodiments of the present disclosure have been described, those skilled in the art will readily understand that many modifications could be made to the exemplary embodiments without departing from the original teaching and advantages of the present disclosure. Therefore, all such modifications are intended to be comprised in the scope of the present disclosure as defined by the claims. It should be understood that the above is a description of the present disclosure; the present disclosure should not be considered to be limited to the specific embodiments disclosed, and modifications to the disclosed embodiments and other embodiments are intended to be comprised within the scope of the present disclosure.

## Claims

1. A transformer (100), **characterized in that** the transformer comprises:
a core (10), comprising a frame part (11) and a central pillar (12);
a coil (20) wound on the central pillar (12);
a holder (30) comprising a shaft part (31), and the shaft part (31) wrapping the central pillar (12) so that the shaft part (31) is located between the coil (20) and the central pillar (12),
wherein a first fluid channel (41) for thermally conductive potting glue to flow through is provided between the shaft part (31) and the central pillar (12), and the shaft part (31) is provided with a second fluid channel (42) allowing the thermally conductive potting glue to flow through the shaft part (31) from the first fluid channel (41) to the coil.

2. The transformer (100) according to claim 1, **characterized in that**
the shaft part (31) is provided with a third fluid channel (43) allowing the thermally conductive potting glue to flow from the outside to a region between the shaft part (31) and the coil (20).

3. The transformer (100) according to claim 1 or 2, **characterized in that**
the first fluid channel (41) comprises a recessed or protruding structure (32) arranged on a surface of the shaft part (31) that faces the central pillar (12).

4. The transformer (100) according to claim 1 or 2, **characterized in that**
the second fluid channel (42) comprises a first through-hole (33) running through the shaft part (31).

5. The transformer (100) according to claim 2, **characterized in that**
the third fluid channel (43) is formed by a penetrating part (21) formed inside the coil (20).

6. The transformer (100) according to claim 5, **characterized in that**
the shaft part (31) is provided with a protrusion (34) extending from a surface of the shaft part (31) that faces the coil (20), and the protrusion (34) separats the coil (20) to form the penetrating part (21).

7. The transformer (100) according to claim 5, **characterized in that**
the shaft part (31) is provided with a second through-hole (35) connecting the penetrating part (21) and the first fluid channel (41).

8. The transformer (100) according to claim 2, **characterized in that**
the shaft part (31) is provided with a protrusion (34) extending from a surface of the shaft part (31) that faces the coil (20), and the third fluid channel (43) is formed in the protrusion (34).

9. The transformer (100) according to claim 1 or 2, **characterized in that**
the holder (30) further comprises a wiring part (36), and the wiring part (36) is provided with a wiring terminal (360), and the coil (20) is electrically connected to the wiring terminal (360).

10. The transformer (100) according to claim 1 or 2, **characterized in that**
the coil (20) comprises a first coil (20a) and a second coil (20b);
the holder (30) comprises a first holder (30a) and a second holder (30b), and the first holder (30a) comprises a first shaft part (31a) located between the first coil (20a) and the central pillar (12), and the second holder (30b) comprises a second shaft part (31b) located between the second coil (20b) and the central pillar (12),
wherein the first holder (30a) further comprises a first mating part (37a), and the second holder (30b) further comprises a second mating part (37b), and the first mating part (37a) mates with the second mating part (37b) such that the first holder (30a) and the second holder (30b) are joined together to form the holder (30).

11. The transformer (100) according to claim 10, **characterized in that**
the first mating part (37a) is a joining slot, and the second mating part (37b) is a joining protrusion capable of being joined to the joining slot, or
the second mating part (37b) is a joining slot, and the first mating part (37a) is a joining protrusion capable of being joined to the joining slot.

12. The transformer (100) according to claim 10, **characterized in that**
the central pillar (12) comprises a first central pillar (12a) and a second central pillar (12b), and the first coil (20a) is wound on the first central pillar (12a), the second coil (20b) is wound on the second central pillar (12b), and the first central pillar (12a) and the second central pillar (12b) are aligned with and adjacent to each other, so as to form the central pillar (12).

13. An on-board charger, **characterized in that** the on-board charger comprises the transformer (100) according to any one of claims 1 - 12.

14. An electric drive system, comprising the on-board charger according to claim 13.

15. A vehicle, **characterized in that** the vehicle comprises the on-board charger according to claim 13 or the electric drive system according to claim 14.
